# EUROPÄISCHE PATENTSCHRIFT

(11) **EP 1 579 770 B1**
(45) Veröffentlichungstag und Bekanntmachung des Hinweises auf die Patenterteilung: **08.08.2007**
(21) Anmeldenummer: 05003883.5
(22) Anmeldetag: 23.02.2005
(51) Int. Cl.: A23F 5/24, C12C 5/02

(54) **Bier- und kaffeehaltiges Getränk**
Drink containing beer and coffee
Boisson contenant de la bière et du café

(30) Priorität: 26.03.2004 DE 102004015786
(43) Veröffentlichungstag der Anmeldung: 28.09.2005
(73) Patentinhaber: Tchibo GmbH, 22297 Hamburg (DE)
(72) Erfinder: Ammer, Dieter, 22609 Hamburg (DE); Lantz, Ingo, Dr., 22149 Hamburg (DE); Lampe, Dieter, 21031 Hamburg (DE); Jeske, Bernd, 21031 Hamburg (DE)
(74) Vertreter: UEXKÜLL & STOLBERG

(56) Entgegenhaltungen:
- DE-A1- 1 442 279
- PATENT ABSTRACTS OF JAPAN Bd. 1999, Nr. 08, 30. Juni 1999 (1999-06-30) & JP 11 075808 A (SAPPORO BREWERIES LTD), 23. März 1999 (1999-03-23)
- DATABASE INTERNET [Online] 19. Februar 2004 (2004-02-19), N.N.: "bayrisch" XP002335531 gefunden im HTTP://WEB.ARCHIVE.ORG/WEB/20040219234030/ HTTP://WWW.SUCHTMAUS.DE/BAYRISCH.HTM

## Beschreibung

Die Erfindung betrifft ein Getränk.

Getränke wie Bier, Fruchtsaft oder Kaffee sind schon lange bekannt. Die bekannten Getränke erfüllen aber nicht immer die Geschmackserwartungen aller Verbraucherkreise.

Es ist Aufgabe der Erfindung, ein Getränk mit einer neuartigen Geschmacksrichtung zu schaffen.

Diese Aufgabe wird gelöst durch ein Getränk mit den Merkmalen des Anspruchs 1. Vorteilhafte Ausgestaltungen der Erfindung ergeben sich aus den Unteransprüchen.

Das erfindungsgemäße Getränk weist Bier in einem Anteil von 30 Gew.-% bis 70 Gew.-% (vorzugsweise 40 Gew.-% bis 60 Gew.-% oder 45 Gew.-% bis 55 Gew.-%) sowie Kaffeekonzentrat in einem Anteil von 20 Gew.-% bis 50 Gew.-% auf. Unter den Begriff Kaffee fallen hier sowohl coffeinhaltiger Kaffee als auch entcoffeinierter Kaffee. Für das Kaffeekonzentrat gibt es mehrere Möglichkeiten.

Aus DE 1 442 279 A ist ein Verfahren zur Herstellung von Bier bekannt, bei dem zunächst aus Rohstoff ein Konzentrat hergestellt wird, das zu Bier weiterverarbeitet wird. Der Rohstoff kann unter anderem Kaffee enthalten. Die Zugabe von Kaffee erfolgt vor der Gärung.

JP 11 075808 A offenbart ein weiteres Getränk, das als Zutaten Kaffeebohnen enthält, die aber vor einem Fermentierungsschritt zugesetzt werden.

So kann das Kaffeekonzentrat einen Brühextrakt aus 35 g bis 85 g Kaffee pro Liter Wasser (vorzugsweise aus 50 g bis 70 g Kaffee pro Liter Wasser) aufweisen. In einer bevorzugten Ausführungsform ist das Kaffeekonzentrat aus frisch gebrühtem Röstkaffee hergestellt und liegt vorzugsweise als Brühextrakt aus 35 g bis 85 g Röstkaffee pro Liter Wasser vor (besonders bevorzugt 50 g bis 70 g Röstkaffee pro Liter Wasser). Das Kaffeekonzentrat wird dabei also durch Brühen von Röstkaffee gewonnen, wobei z.B. 50 g bis 70 g Röstkaffee mit einem Liter heißen Wasser aufgebrüht (übergossen) werden und der Extrakt aufgefangen wird.

Eine andere Möglichkeit für das Kaffeekonzentrat ist eine Lösung aus 10 g bis 30 g Extraktkaffee pro Liter Wasser, vorzugsweise 12 g bis 20 g Extraktkaffee pro Liter Wasser. Extraktkaffee wird auch als "löslicher Kaffee" bezeichnet; aber der Begriff "Lösung" ist hier nicht in strengem Sinne zu verstehen, da auch nichtlösliche Anteile auftreten können.

Denkbar ist auch die Verwendung einer Mischung von Flüssigextrakt mit Wasser als Kaffeekonzentrat. Flüssigextrakt ist ein hoch konzentrierter Kaffeeextrakt in flüssiger Form, in dem auch nichtlösliche Bestandteile enthalten sein können. Um ein für das erfindungsgemäße Getränk brauchbares Kaffeekonzentrat herzustellen, das in seinem Geschmack mit den oben erläuterten Kaffeekonzentraten vergleichbar ist, muss der Flüssigextrakt mit Wasser verdünnt werden.

Das erfindungsgemäße Getränk zeichnet sich durch einen neuartigen Geschmack aus und setzt der generell ermüdenden Wirkung des Biers die meist anregende Wirkung des Kaffees entgegen.

Vorzugsweise enthält das Getränk einen Zusatz von Zucker in einem Anteil von 2 Gew.-% bis 7 Gew.-%, vorzugsweise 3,5 Gew.-% bis 5,5 Gew.-%. Als Zucker kann Raffinade verwendet werden, z.B. der Handelsklasse 1.

Das Getränk enthält einen Zusatz von Fruchtgrundstoff in einem Anteil von 0,5 Gew.-% bis 4 Gew.-%, vorzugsweise 2 Gew.-% bis 3 Gew.-%. Der Fruchtgrundstoff weist ein Fruchtkonzentrat auf, z.B. aus Zitrusfrüchten, wie Zitrone und/oder Grapefruit. Derartige Fruchtgrundstoffe werden in der Lebensmittelindustrie allgemein verwendet, z.B. als Ausgangsstoff für viele Erfrischungsgetränke, bei deren Herstellung der Fruchtgrundstoff mit Wasser gemischt wird (z.B. im Verhältnis 1 Teil Fruchtgrundstoff auf 5 Teile Wasser). Neben dem Fruchtkonzentrat (oder Fruchtsaftkonzentrat) kann der Fruchtgrundstoff auch weitere Substanzen enthalten, die (gegebenenfalls zusätzlich zu bereits in dem Fruchtkonzentrat enthaltenen Anteilen) zugesetzt sind, wie Mineralstoffe, Vitamine, Säuerungsmittel, Süßstoff, Konservierungsmittel und/oder Stabilisatoren. Der Wasseranteil des Fruchtgrundstoffs variiert, ist aber nicht zu niedrig, um eine bessere Verarbeitbarkeit zu erreichen, und liegt typischerweise in der Größenordnung von 70 Gew.-% bis 95 Gew.-%. Dem erfindungsgemäßen Getränk verleiht der Fruchtgrundstoff einen erfrischenden Geschmack.

Für das Bier kommen im Prinzip alle Biersorten in Betracht, selbst solche, die nicht nach dem absoluten Reinheitsgebot gemäß dem Biersteuergesetz der Bundesrepublik Deutschland hergestellt sind oder die nur umgangssprachlich als "Bier" bezeichnet werden. Bevorzugt werden aber Sorten, die nur aus Hopfen, Malz, Wasser und Hefe gebraut sind. Das Bier kann z.B. dunkles Bier, z.B. Altbier oder dunkles Weizenbier, aufweisen, aber auch andere Sorten, wie z.B. Pils oder helles Weizenbier. Denkbar sind auch Mischungen mehrerer Biersorten.

Ferner kann das Getränk einen Zusatz von Wasser enthalten, z.B. in einem Anteil von 15 Gew.-% bis 25 Gew.-%; vorzugsweise 15 Gew.-% bis 20 Gew.-%. Durch den Zusatz von Wasser lässt sich eine Feinabstimmung der Konzentration der übrigen Bestandteile in dem Getränk vornehmen.

Mit Hilfe ausgewählter Bestandteile lassen sich z.B. der Geschmack oder die Haltbarkeit des Getränks beeinflussen. Derartige Bestandteile können gezielt zugesetzt, aber auch bereits in anderen Zutaten enthalten sein, insbesondere dem Fruchtgrundstoff. In Frage kommen z.B. Säuerungsmittel (wie z.B. Milchsäure), Antioxidationsmittel (wie z.B. Ascorbinsäure), Stabilisatoren (wie z.B. Johannisbrotkernmehl), Konservierungsstoffe (wie z.B. Natriumbenzoat), natürliche Aromen, Fructose, Süßstoff (wie z.B. Natriumcyclamat, Saccharin-Natrium) und/oder Vitamine, auch Vitaminmischungen.

Der Kohlendioxidgehalt des erfindungsgemäßen Getränks liegt vorzugsweise im Bereich von 3 g/l bis 8 g/l, der Alkoholgehalt vorzugsweise im Bereich von 1,5 Vol.-% bis 4,0 Vol.-% und der Coffeingehalt vorzugsweise im Bereich von 150 mg/l bis 400 mg/l; besonders bevorzugte Bereiche sind für den Kohlendioxidgehalt 4 g/l bis 7 g/l, für den Alkoholgehalt 2,3 Vol.-% bis 2,8 Vol.-% und für den Coffeingehalt 250 mg/l bis 350 mg/l. Die Gehalte an Kohlendioxid (CO₂), Alkolhol und Coffein ergeben sich in der Regel bei der Mischung der zuvor erläuterten Zutaten. Es ist aber auch denkbar, dem Getränk gezielt Kohlendioxid und gegebenenfalls auch Coffein und/oder Alkohol zuzuführen, um einen jeweiligen bevorzugten Gehalt zu erreichen.

Im Folgenden wird die Erfindung anhand eines Ausführungsbeispiels näher erläutert.

### Beispiel

Durch frisches Aufbrühen von 55 g Röstkaffee mit einem Liter heißen Wasser wurde zunächst ein Kaffeekonzentrat hergestellt.

265 g dieses Kaffeekonzentrats wurden mit 495 g Bier (im Ausführungsbeispiel Bier der Marke "Dark" der Brauerei Beck GmbH & Co. KG, Bremen) und 174 g Wasser unter Zusatz von 45 g Raffinadezucker und 21 g eines Fruchtgrundstoffs gemischt.

Im Ausführungsbeispiel wurde als Fruchtgrundstoff ein Produkt mit einem Citrussaftkonzentrat und als weiteren Zutaten Fructose, Mineralstoffen (Trikaliumcitrat, Trinatriumcitrat, Magnesiumcarbonat), Milchsäure als Säuerungsmittel, Vitaminen (Vitamin C, Niacin, Vitamin E, Pantothensäure, Folsäure, Biotin), Natriumcyclamat und Saccharin-Natrium als Süßstoffen, den Konservierungsstoffen E211 und E202, natürlichem Aroma, Johannisbrotkernmehl als Stabilisator sowie Wasser verwendet.

Es ergab sich ein von Probanden als wohlschmeckend und erfrischend bewertetes Getränk.

## Patentansprüche

1. Getränk, mit
- Bier in einem Anteil von 30 Gew.-% bis 70 Gew.-%, vorzugsweise 40 Gew.-% bis 60 Gew.-%, besonders bevorzugt 45 Gew.-% bis 55 Gew. -%,
- Kaffeekonzentrat in einem Anteil von 20 Gew.-% bis 50 Gew.-%, vorzugsweise 20 Gew.-% bis 30 Gew.-%, wobei das Kaffeekonzentrat ein aus der folgenden Gruppe ausgewähltes Kaffeeprodukt aufweist: Brühextrakt aus 35 g bis 85 g Kaffee pro Liter Wasser, vorzugsweise 50 g bis 70 g Kaffee pro Liter Wasser; Lösung aus 10 g bis 30 g Extraktkaffee pro Liter Wasser, vorzugsweise 12 g bis 20 g Extraktkaffee pro Liter Wasser; Mischung von Flüssigextrakt mit Wasser,
- einem Zusatz von Fruchtgrundstoff in einem Anteil von 0,5 Gew.-% bis 4 Gew.-%, vorzugsweise 2 Gew.-% bis 3 Gew.-%, wobei der Fruchtgrundstoff ein Fruchtkonzentrat aufweist, vorzugsweise aus Zitrusfrüchten, besonders bevorzugt Zitrone und/oder Grapefruit.

2. Getränk nach Anspruch 1, **gekennzeichnet durch** einen Zusatz von Wasser in einem Anteil von 15 Gew.-% bis 25 Gew.-%, vorzugsweise 15 Gew.-% bis 20 Gew.-%.

3. Getränk nach Anspruch 1 oder 2, **gekennzeichnet durch** einen Zusatz von Zucker in einem Anteil von 2 Gew.-% bis 7 Gew.-%, vorzugsweise 3,5 Gew.-% bis 5,5 Gew.-%, wobei der Zucker vorzugsweise Raffinade aufweist.

4. Getränk nach einem der Ansprüche 1 bis 3, **dadurch gekennzeichnet, dass** das Bier mindestens eine der aus der folgenden Gruppe ausgewählten Sorten aufweist: dunkles Bier, Altbier, Pils, Weizenbier.

5. Getränk nach einem der Ansprüche 1 bis 4, **dadurch gekennzeichnet, dass** das Kaffeekonzentrat aus frisch gebrühtem Röstkaffee hergestellt ist und vorzugsweise als Brühextrakt aus 35 g bis 85 g Röstkaffee pro Liter Wasser vorliegt, besonders bevorzugt aus 50 g bis 70 g Röstkaffee pro Liter Wasser.

6. Getränk nach einem der Ansprüche 1 bis 5, **gekennzeichnet durch** einen CO₂-Gehalt von 3 g/l bis 8 g/l, vorzugsweise 4 g/l bis 7 g/l.

7. Getränk nach einem der Ansprüche 1 bis 6, **gekennzeichnet durch** einen Alkoholgehalt von 1,5 Vol.-% bis 4,0 Vol.-%, vorzugsweise 2,3 Vol.-% bis 2,8 Vol.-%.

8. Getränk nach einem der Ansprüche 1 bis 7, **gekennzeichnet durch** einen Coffeingehalt von 150 mg/l bis 400 mg/l, vorzugsweise 250 mg/l bis 350 mg/l.

9. Getränk nach einem der Ansprüche 1 bis 8, **gekennzeichnet durch** mindestens einen der aus der folgenden Gruppe ausgewählten Bestandteile: Säuerungsmittel, Milchsäure; Antioxidationsmittel, Ascorbinsäure; Stabilisatoren, Johannisbrotkernmehl; Konservierungsstoffe, Natriumbenzoat; natürliche Aromen; Fructose; Vitamine, Vitaminmischungen; Süßstoff, Natriumcyclamat, Saccharin-Natrium.

## Claims

1. Beverage comprising
- beer in a content of from 30 % by weight to 70 % by weight, preferably 40 % by weight to 60 % by weight, particularly preferably 45 % by weight to 55 % by weight,
- coffee concentrate in a content of from 20 % by weight to 50 % by weight, preferably 20 % by weight to 30 % by weight, wherein the coffee concentrate comprises a coffee product selected from the following group: brew extract consisting of from 35 g to 85 g of coffee per litre of water, preferably 50 g to 70 g of coffee per litre of water; solution consisting of from 10 g to 30 g of extract coffee per litre of water, preferably 12 g to 20 g of extract coffee per litre of water; mixture of liquid extract with water,
- an additive of fruit raw material in a content of from 0.5 % by weight to 4 % by weight, preferably 2 % by weight to 3 % by weight, the fruit raw material comprising a fruit concentrate, consisting preferably of citrus fruits, particularly preferably lemon and/or grapefruit.

2. Beverage according to claim 1, **characterised by** an addition of water in a content of from 15 % by weight to 25 % by weight, preferably 15 % by weight to 20 % by weight.

3. Beverage according to either claim 1 or claim 2, **characterised by** an addition of sugar in a content of from 2 % by weight to 7 % by weight, preferably 3.5 % by weight to 5.5 % by weight, the sugar preferably comprising refined sugar.

4. Beverage according to any one of claims 1 to 3, **characterised in that** the beer comprises at least one of the types selected from the following group: ale, pale ale, pils, wheat beer.

5. Beverage according to any one of claims 1 to 4, **characterised in that** the coffee concentrate is prepared from freshly brewed roasted coffee and is preferably in the form of a brew extract consisting of from 35 g to 85 g of roasted coffee per litre of water, particularly preferably 50 g to 70 g of roasted coffee per litre of water.

6. Beverage according to any one of claims 1 to 5, **characterised by** a CO₂ content of from 3 g/l to 8 g/l, preferably 4 g/l to 7 g/l.

7. Beverage according to any one of claims 1 to 6, **characterised by** an alcohol content of from 1.5 % by volume to 4.0 % by volume, preferably 2.3 % by volume to 2.8 % by volume.

8. Beverage according to any one of claims 1 to 7, **characterised by** a caffeine content of from 150 mg/l to 400 mg/l, preferably 250 mg/l to 350 mg/l.

9. Beverage according to any one of claims 1 to 8, **characterised by** at least one of the constituents selected from the following group: acidifying agent, lactic acid, antioxidant, ascorbic acid; stabilisers, carob flour; preservatives, sodium benzoate; natural aromas; fructose; vitamins, vitamin mixtures, sweetener, sodium cyclamate, sodium saccharin.

## Revendications

1. Boisson comprenant
- de la bière en une proportion de 30 % en poids à 70 % en poids, de préférence de 40 % en poids à 60 % en poids, de façon particulièrement préférée de 45 % en poids à 55 % en poids,
- du concentré de café en une proportion de 20 % en poids à 50 % en poids, de préférence de 20 % en poids à 30 % en poids, le concentré de café comportant un produit à base de café choisi dans le groupe suivant : de l'extrait d'infusion obtenu à partir de 35 g à 85 g de café par litre d'eau, de préférence de 50 g à 70 g de café par litre d'eau ; une solution de 10 g à 30 g de café soluble par litre d'eau, de préférence de 12 g à 20 g de café soluble par litre d'eau ; un mélange d'extrait liquide et d'eau,
- un ajout de substance à base de fruit en une proportion de 0,5 % en poids à 4 % en poids, de préférence de 2 % en poids à 3 % en poids, la substance à base de fruit comportant un concentré de fruit, de préférence d'agrumes, de façon particulièrement préférée de citron et/ou de pamplemousse.

2. Boisson selon la revendication 1, **caractérisée par** un ajout d'eau en une proportion de 15 % en poids à 25 % en poids, de préférence de 15 % en poids à 20 % en poids.

3. Boisson selon la revendication 1 ou 2, **caractérisée par** un ajout de sucre en une proportion de 2 % en poids à 7 % en poids, de préférence de 3,5 % en poids à 5,5 % en poids, le sucre étant de préférence du sucre raffiné.

4. Boisson selon l'une quelconque des revendications 1 à 3, **caractérisée en ce que** la bière est au moins l'une des sortes choisies dans le groupe suivant : bière brune, *Altbier* (bière maltée de fermentation haute), *Pils* (bière blonde de fermentation haute), bière blanche.

5. Boisson selon l'une quelconque des revendications 1 à 4, **caractérisée en ce que** le concentré de café est préparé à partir de café torréfié fraîchement infusé et se trouve de préférence sous forme d'extrait d'infusion obtenu à partir de 35 g à 85 g de café torréfié par litre d'eau, de façon particulièrement préférée de 50 g à 70 g de café torréfié par litre d'eau.

6. Boisson selon l'une quelconque des revendications 1 à 5, **caractérisée par** une teneur en CO₂ de 3 g/l à 8 g/l, de préférence de 4 g/l à 7 g/l.

7. Boisson selon l'une quelconque des revendications 1 à 6, **caractérisée par** une teneur en alcool de 1,5 % en volume à 4,0 % en volume, de préférence de 2,3 % en volume à 2,8 % en volume.

8. Boisson selon l'une quelconque des revendications 1 à 7, **caractérisée par** une teneur en caféine de 150 mg/l à 400 mg/l, de préférence de 250 mg/l à 350 mg/l.

9. Boisson selon l'une quelconque des revendications 1 à 8, **caractérisée par** au moins l'un des composants choisis dans le groupe suivant : acidifiants, acide lactique ; antioxydants, acide ascorbique ; stabilisants, farine de graines de caroube ; conservateurs, benzoate de sodium ; arômes naturels ; fructose ; vitamines ; mélanges de vitamines ; édulcorant, cyclamate de sodium, saccharine sodique.
